Europäisches Patentamt

European Patent Office

Office européen des brevets

(19)

(11) Veröffentlichungsnummer: **0 355 288**
A2

(12) **EUROPÄISCHE PATENTANMELDUNG**

(21) Anmeldenummer: 89110335.0

(22) Anmeldetag: 08.06.89

(51) Int. Cl.4: **C08G 59/50 , C08L 63/00**

(30) Priorität: 29.07.88 DE 3825754

(43) Veröffentlichungstag der Anmeldung:
28.02.90 Patentblatt 90/09

(84) Benannte Vertragsstaaten:
AT CH DE ES FR GB IT LI NL SE

(71) Anmelder: HÜLS AKTIENGESELLSCHAFT
Patentabteilung / PB 15 - Postfach 13 20
D-4370 Marl 1(DE)

(72) Erfinder: Flakus, Werner, Dr.
Dürerstrasse 23
D-4350 Recklinghausen(DE)

(54) Zweikomponentensysteme auf Epoxidbasis und Diaminen.

(57) Bekannte wäßrige Epoxid-Diamin-Systeme enthalten die an sich leicht wasserlöslichen Diamine in hydrophobierter Form, sie sind dann wenig wasserlöslich und emulgierbar und von einer Konsistenz die niedrigen Harzgehalts, d. h. hohe Wasseranteile erfordert. Die an sich wenig wasserlösliche Epoxidkomponente wird mit Emulgatoren einfach in Wasser emulgiert. Der Nachteil dieser Systeme ist der hohe Wassergehalt (üblich > 50 Massenprozent), der verdampfen muß und zu Unregelmäßigkeiten in der Beschichtung führt. Außerdem sind Dickfilm-Beschichtungen nicht möglich. Es war daher Aufgabe der Erfindung wäßrige Emulsionen mit geringem Wassergehalt auf der Basis Amin/Epoxid zu entwickeln.

Gelöst wird die Aufgabe durch die Entwicklung wäßriger Zweikomponentensysteme auf Basis Epoxidbasis und Diamin und 1 bis 20 Massenprozent Wasser als Härter und gegebenenfalls üblichen Zusatzstoffen dadurch gekennzeichnet, daß sie einerseits aus (cyclo)aliphatischen, diprimären Diaminen von $C_2$ bis $C_{12}$ oder deren Mischungen in homogener Lösung mit 2 bis 40 Massenprozent Wasser und andererseits aus Polyglycidverbindungen von Bisphenolen, von aliphatischen Polyolen, von Polyetherpolyole oder von Dicarbonsäuren oder Mischungen dieser untereinander, jeweils jedoch in Paarung mit Polyacrylaten von Polyolen, oder Polyetherpolyolen bestehen.

Die erfindungsgemäßen Systeme finden Anwendung zur Beschichtung von anorganischem und organischem Material.

EP 0 355 288 A2

## Zweikomponentensysteme auf Epoxidbasis und Diaminen

Bekannte Zweikomponenten-Amin-Epoxid-Systeme, die in Wasser emulgiert sind, d. h. Öl-in-Wasser-Emulsionen bilden, trocknen nach Mischung von Amin- und Epoxid-Emulsion in angemessener Zeit bei der Umgebungstemperatur physikalisch und gelangen chemisch zur Aushärtung. Es liegt auf der Hand, daß die kaltgehärteten Beschichtungen nach dem Leistungsbild der bei Wärmehärtung erzielbaren Filme bewertet werden.

Die nun durch Kalthärtung von im Handel erhältlichen, wäßrigen Amin-Epoxid-Emulsionen erzielten Beschichtungen sind befriedigend, zum Teil auch gut. Ihr Vorteil der Substitution von organischen Lösemitteln durch Wasser ist offensichtlich.

Nachteile solcher Systeme sind jedoch der hohe Wasseranteil, der in Grenzfällen 35, üblicherweise 50, aber auch 70 und mehr Massenprozent, beträgt. Diese hohen Wasseranteile müssen im Regelfall ohne Wärmezufuhr abdampfen, was je nach Umgebungstemperatur und Belüftung langwierig sein kann. Vielfach verbleiben im Film oder auf dem Substrat Restanteile Wasser, die unvorteilhaft sind.

Nachteilig ist ferner, daß mit Wasseranteilen dieser Bandbreite glanzgestörte Oberflächen bei pigmentierten Formulierungen gebildet werden. Außerdem resultieren mit steigendem Wassergehalt der Ausgangsemulsionen bei der Kalthärtung hinsichtlich Elastizität und Lösemittelbeständigkeit verschlechterte Filme oder Beschichtungen. Bekanntlich sind auch Dickfilm-Beschichtungen weder mit hohem Wasser- noch Lösemittelanteil realisierbar.

Einschlägige Epoxidverbindungen sind wenig wasserlöslich und z. B. mit nichtionogenen Emulgatoren in einfacher Weise in Wasser zu emulgieren. Polyamine sind im allgemeinen gut wasserlöslich, bilden also leicht wäßrige Lösungen, aber keine Emulsionen in Wasser, sie brechen z. B. Epoxidemulsionen mit Phasentrennung.

Zur Herstellung aminischer Emulsionen müssen Amine daher hydrophobiert werden, d. h. geeigneten chemischen Umsetzungen unterworfen werden, um wenig wasserlösliche Reaktionsprodukte zu erhalten.

Das kann durch Additions-, Kondensationsreaktionen oder Substitution erfolgen. Die so erhältlichen Reaktionsprodukte der Polyamine sind wenig wasserlöslich und emulgierbar, aber von einer Konsistenz, die nur niedrige Harzgehalte, d. h. hohe Wasseranteile erfordert, die, wie erwähnt, unvorteilhaft sind und besonders selbstverlaufende Beschichtungen höher Schichtdicke nicht zulassen.

Es war daher Aufgabe der Erfindung, wäßrige Emulsionen geringen Wassergehaltes auf der Basis aminischer und epoxidischer Reaktanten zu entwickeln.

Überraschenderweise ist es nun gelungen, wäßrige Epoxid-Amin-Systeme zu entwickeln, die mit nur 1 bis 20 Massenprozent Wasser zur Kalthärtung gelangen und elastische Beschichtungen guter Lösemittelbeständigkeit ausbilden, vor allem aber in dicken Schichten und mit hohem Füllgrad appliziert werden können. Erfindungsgemäß enthält das System einerseits Härter aus Polyaminen, vorzugsweise primären, nichtaromatischen Diaminen bzw. Mischungen derselben, die nicht hydrophobiert sind, in homogener Lösung mit 2 bis 40 Massenprozent Wasser und andererseits Epoxidharzzubereitungen aus Polyglycidverbindungen von Bisphenolen, von aliphatischen Polyolen, von Polyetherpolyolen oder von Dicarbonsäuren oder Mischungen dieser untereinander, die jeweils jedoch in Paarung mit Polyacrylaten von Polyolen, oder Polyetherpolyolen bestehen.

Die Epoxidharzzubereitungen können z. B. aus Diglyciden, wie z. B. der Bisphenole A (Aceton-Phenol-Kondensationsprodukt) und F (Formaldehyd-Phenol-Kondensationsprodukt) oder Diglyciden von Dicarbonsäuren, von Diolen, im besonderen auch von Polyetherdiolen bestehen, wobei diese z. B. mit Dioldiacrylaten bzw. Polyetherdiol-diacrylaten abgemischt werden, aber frei von Wasser oder Tensiden sind. Die Epoxidzubereitung kann anstelle von Diglyciden auch Triglycide oder Mischungen davon, wie z. B. Trimethylolpropantriglycid und anstelle von Diacrylaten wie z. B. Tripropylenglykoldiacrylat auch Triacrylate, wie z. B. Trimethylolpropantriacrylat oder Mischungen enthalten.

Die wasserhaltigen Diaminlösungen und die acrylathaltigen Polyglycidlösungen sind lagerstabile, ausschließlich physikalische Mischungen vorgenannter Bestandteile.

Gegenstand der Erfindung sind daher Zweikomponentensysteme auf Epoxidharzbasis und Diaminen mit 1 bis 20 Massenprozent Wasser als Härter mit gegebenenfalls üblichen Zusatzstoffen, welches dadurch gekennzeichnet ist, daß sie einerseits aus (cyclo)aliphatischen diprimären Diaminen von $C_2$ bis $C_{12}$ oder deren Mischungen in homogener Lösung mit 2 bis 40 Massenprozent Wasser und andererseits aus Polyglycidverbindungen von Bisphenolen, von aliphatischen Polyolen, von Polyetherpolyolen, oder von Dicarbonsäuren oder Mischungen dieser untereinander, jeweils jedoch in Paarung mit Polyacrylaten von Polyolen, oder Polyetherpolyolen bestehen.

Ein weiterer Gegenstand der Erfindung ist ein Verfahren zur Herstellung der Zweikomponentensysteme

2

auf Epoxidharzbasis und Diaminen mit 1 bis 20 Massenprozent Wasser als Härter, welches dadurch gekennzeichnet ist, daß (cyclo)aliphatische, diprimäre Diamine von $C_2$ bis $C_{12}$ oder deren Mischungen in homogener Lösung mit 2 bis 40 Massenprozent Wasser mit Polyglycidverbindungen von Bisphenolen, von aliphatischen Polyolen, von Polyetherpolyolen, oder von Dicarbonsäuren oder Mischungen dieser untereinander, jeweils jedoch in Paarung mit Polyacrylaten von Polyolen, oder Polyetherpolyolen als Harzkomponenten, sowie gegebenenfalls üblichen Zusatzstoffen bei Raumtemperatur in Abwesenheit von Katalysatoren vermischt werden.

Aminkomponente und Acrylatkomponente werden im Äquivalentverhältnis von 1 : 1 sowie Aminkomponente und Glycidkomponente im Äquivalentverhältnis von 1 : 1 zur Reaktion gebracht.

Vorzugsweise gelangen 4n + 4 Äqivalente Diamin, 2n Äquivalente Polyacrylate und 2n + 4 Äquivalente Polyglycide zur Abmischung und Reaktion, wobei n = 1 bis 6 bedeutet.

Erst nach Mischung des wäßrigen Aminhärters und des polyacrylathaltigen Polyepoxidharzes kommt es zur Bildung von Wasser-in-Öl-Emulsionen (W/O-Systemen) und zur Reaktion der Reaktanten. Die Epoxidhärtung erfolgt ohne fremdkatalytische Einwirkung. Überraschenderweise wird dieser Reaktionsablauf, jedenfalls in der Bandbreite von Wasseranteilen, die W/O-Systemen entsprechen und vorgangs dargelegt wurden, nicht beeinträchtigt, sondern nachhaltig gefördert. In Abwesenheit von Wasser verläuft der Härtungsmechanismus vorgenannter Mischungen unbefriedigend ab. Höhere Wasseranteile als genannt sind nicht nur überflüssig, sondern schädlich, da sie die erfindungsgemäße W/O-Emulsion in eine O/W-Emulsion mit den dargestellten Nachteilen bei hohem Wassergehalt überführen.

Die erfindungsgemäß beanspruchten, wäßrigen Amin-Epoxid-Zweikomponenten-Systeme übertreffen den Stand der Technik in nachfolgenden Positionen:

1. Im Wassergehalt der Reaktionsmischung; er beträgt nur < 20 Massenprozent Wasser, gegenüber 30, 50 und höheren Massenprozent Wasser herkömmlicher Systeme.

2. In der Eliminierung chemischer Verfahrensschritte zur Herstellung des Härters.

3. In der Eliminierung von Lösemitteln, die abdampfen oder von Katalysatoren und Emulgatoren, die im System verbleiben.

4. In der Erzielung hochglänzender Beschichtungen mit z. B. Weißpigmenten.

5. In der Realisierung von hochgefüllten, selbstverlaufenden Beschichtungen hoher Schichtdicke, aufgrund niedriger Viskosität der Harzkomponenten und geringen Wassergehalts der Mischung.

6. In der Kalthärtung mit den erfindungsgemäß hergestellten wäßrigen Amin-Epoxid-Systemen erreichen die erzielten Beschichtungen die gleichen oder annähernd die gleichen Prädikate wie in der Wärme, z. B. in 60 Minuten bei 120 °C gehärtete Beschichtungen.

Erfindungsgemäß einsetzbar sind vorzugsweise nicht-aromatische Diamine, d. h. Diamine aliphatischer, cyclischer und cycloaliphatischer Struktur sowie Mischungen dieser untereinander, soweit diese diprimäre $NH_2$-Äquivalente aufweisen und wasserlöslich sind. Insbesondere geeig net sind molare Mischungen von Isophorondiamin und 2,2,4/2,4,4-Trimethylhexamethylendiamin. Weitere geeignete Diamine sind z. B. 2-Methylpentamethylen- bzw. 2-Ethyltetramethylen-diamin, insbesonders in Kombination mit Isophorondiamin.

Erfindungsgemäß einsetzbar sind alle Digylcide und Triglycide sowie Mischungen derselben untereinander, soweit diese bei Raumtemperatur flüssige Konsistenz aufweist. Besonders geeignet sind Diglycide von Bisphenolen oder Mischungen derselben mit 1 bis 20 Massenprozent Trimethylolpropantriglycid.

Erfindungsgemäß einsetzbar sind Diacrylate und Triacrylate von aliphatischen Polyolen und Polyetherpolyolen, vorzugsweise solche der Kohlenstoffkettenlänge der Diolkomponente von $C_5$ bis $C_{20}$. Besonders geeignet sind Diacrylate, insbesondere Tripropylenglykoldiacrylat oder Mischungen derselben mit 1 bis 20 Massenprozent Trimethylolpropantriacrylat.

Die wäßrigen Amin-Epoxid-Systeme können mit Pigmenten, Füllstoffen, mineralischen Baustoffen und dergleichen versetzt werden.

Verwendung finden die beanspruchten Systeme zum Beschichten oder Verkleben von organischen und anorganischen Materialien, wie z. B. von Metallen, Kunststoffen oder mineralischen Oberflächen.

Beispiele

| Beispiel 1: Klarlack | | |
|---|---|---|
| Epoxidharz: | | |
| 480,0 g | Diglycidether des Bisphenol A | 1.27 Mol MG 378 |
| 479,5 g | Diglycidether des Bisphenol F | 1.37 Mol MG 350 |
| 104,9 g | Trimethylolpropantriglycid | 0.24 Mol MG 437 |
| 300,0 g | Tripropylenglykoldiacrylat | 1.0 Mol |
| 1 364,4 g | werden mit | |
| Aminhärter: | | |
| 170,0 g | Isophorondiamin | IPDA 1.0 Mol |
| 158,0 g | 2.2.4.(2.4.4.)Trimehtylhexamethylendiamin | TMDA 1.0 Mol |
| 110,0 g | Wasser | |
| 438,0 g | gemischt und zur Beschichtung von Stahlblechen getestet. | |
| Wassergehalt Aminhärter: 25,1 %<br>Wassergehalt Reaktionsmischung 6,1% | | |

| Stahlblechdaten nach 7 Tagen 25 °C | | nach 1 Std.<br>120 °C |
|---|---|---|
| Pendelhärte König [sek] Gemäß DIN 53 157 | 1. Tag 86<br>3. Tag 189<br>7. Tag 192 | 195 |
| Erichsentiefung [mm] Gemäß DIN 53 516 | > 10,0 | > 10,0 |
| Acetonresistenz [Cyclen] Reibtest 1 kg/cm$^2$ | > 100 | > 100 |
| Xylolresistenz [Cyclen] Reibtest 1 kg/cm$^2$ | > 100 | > 100 |

| Beispiel 2: Klarlack | | |
|---|---|---|
| Epoxidharz: | | |
| 567,0 g | Diglycidether des Bisphenol A | 1.5 Mol MG 378 |
| 525,5 g | Diglycidether des Bisphenol F | 1.5 Mol MG 350 |
| 119,0 g | Trimethylolpropantriacrylat | 0.4 Mol |
| 120,0 g | Tripropylenglykoldiacrylat | 0.4 Mol |
| 1 331,0 g | werden mit | |
| Aminhärter: | | |
| 170,0 g | IPDA 1.0 Mol | |
| 158,0 g | TMDA 1.0 Mol | |
| 110,0 g | Wasser | |
| 438,0 g | gemischt und zur Beschichtung von Stahlblechen getestet. | |
| Wassergehalt Aminhärter: 25,1 %<br>Wassergehalt Reaktionsmischung 6,2 % | | |

| Stahlblechdaten nach 7 Tagen 25 °C | | nach 1 Std. 120 °C |
|---|---|---|
| Pendelhärte König [sek] Gemäß DIN 53 157 | 1. Tag 84<br>3. Tag 186<br>7. Tag 201 | 205 |
| Erichsentiefung [mm] Gemäß DIN 53 516<br>Acetonresistenz [Cyclen] Reibtest 1 kg/cm$^2$<br>Xylolresistenz [Cyclen] Reibtest 1 kg/cm$^2$ | 10,0<br>> 100<br>> 100 | 10,0<br>> 100<br>> 100 |

| Beispiel 3: Klarlack | | |
|---|---|---|
| **Epoxidharz:** | | |
| 793,8 g<br>270,0 g<br>300,0 g<br>1 363,8 g | Diglycidether des Bisphenol A<br>2.2.4.(2.4.4.)Trimethyladipinsäure-diglycidester<br>Tripropylenglykoldiacrylat<br>werden mit | 2.1 Mol<br>0.9 Mol<br>1.0 Mol |
| **Aminhärter:** | | |
| 340,0 g<br>113,0 g | IPDA 2 Mol<br>Wasser | |
| 453,0 g | gemischt und zur Beschichtung von Stahlblechen getestet. | |
| Wassergehalt Aminhärter: 25,0 %<br>Wassergehalt Reaktionsmischung 6,2 % | | |

| Stahlblechdaten nach 7 Tagen 25 °C | | nach 1 Std. 120 °C |
|---|---|---|
| Pendelhärte König [sek] Gemäß DIN 53 157 | 1. Tag 93<br>3. Tag 200<br>7. Tag 219 | 204 |
| Erichsentiefung [mm] Gemäß DIN 53 516<br>Acetonresistenz [Cyclen] Reibtest 1 kg/cm$^2$<br>Xylolresistenz [Cyclen] Reibtest 1 kg/cm$^2$ | > 10,0<br>90<br>100 | 9,8<br>> 100<br>> 100 |

| Beispiel 4: Klarlack | | |
|---|---|---|
| Epoxidharz | | |
| 2 268 g<br>1 200 g<br>3 468 g | Diglycidether des Bisphenol A<br>Tripropylenglykoldiacrylat<br>werden mit | 6 Mol<br>4 Mol |
| Aminhärter: | | |
| 790 g<br>180 g<br>970 g | TMDA 5 Mol<br>Wasser<br>gemischt und zur Beschichtung von Stahlblechen getestet. | |
| Wassergehalt Aminhärter: 18,6 %<br>Wassergehalt Reaktionsmischung 4,1 % | | |

| Stahlblechdaten nach 7 Tagen 25 °C | | nach 1 Std.<br>120 °C |
|---|---|---|
| Pendelhärte König [sek] Gemäß DIN 53 157 | 1. Tag 80<br>3. Tag 163<br>7. Tag 200 | 213 |
| Erichsentiefung [mm] Gemäß DIN 53 516<br>Acetonresistenz [Cyclen] Reibtest 1 kg/cm$^2$<br>Xylolresistenz [Cyclen] Reibtest 1 kg/cm$^2$ | > 10,0<br>> 100<br>100 | > 10,0<br>> 100<br>> 100 |

| Beispiel 5: Klarlack | | |
|---|---|---|
| Epoxidharz | | |
| 1 063 g<br>300 g<br>1 362 g | Rütapox VE 2913 Epoxid-Äquivalent 177 (Polyglycid der Fa. Bakelite)<br>Tripropylenglykoldiacrylat<br>werden mit | 1 Mol |
| Aminhärter: | | |
| 170,0 g<br>158,0 g<br>157,0 g | IPDA<br>TMDA<br>Wasser | 1.0 Mol<br>1.0 Mol |
| 485.0 g | gemischt und zur Beschichtung von Stahlblechen getestet. | |
| Wassergehalt Aminhärter: 32,4 %<br>Wassergehalt Reaktionsmischung 8,5 % | | |

6

| Stahlblechdaten nach 7 Tagen 25 °C | | nach 1 Std. 120 °C |
|---|---|---|
| Pendelhärte König [sek] Gemäß DIN 53 157 | 1. Tag 94<br>3. Tag 185<br>7. Tag 202 | 207 |
| Erichsentiefung [mm] Gemäß DIN 53 516<br>Acetonresistenz [Cyclen] Reibtest 1 kg/cm²<br>Xylolresistenz [Cyclen] Reibtest 1 kg/cm² | > 10,0<br>> 100<br>> 100 | > 10,0<br>> 100<br>> 100 |

| Beispiel 6: Weißlackzubereiung | | |
|---|---|---|
| Epoxidharz: | | |
| 567 g | Diglycidether des Bisphenol A | 1.5 Mol MG 378 |
| 525 g | Diglycidether des Bisphenol F | 1.5 Mol MG 350 |
| 300 g | Tripropylenglykoldiacrylat | 1.0 Mol |
| 3 096 g | Kronos Cl 310 | |
| 4 488 g | werden dispergiert und mit | |
| 398 g | Aminhärter bestehend aus: | |
| 170 g | Isophorondiamin IPDA 1 Mol | |
| 158 g | 2.2.4(2.4.4.)Trimehtylhexamethylendiamin TMDA 1 Mol | |
| 70 g | Wasser | |
| | gemischt und zur Beschichtung von Stahlblechen getestet. | |
| Wassergehalt Aminhärter: 17,6 % | | |
| Wassergehalt Reaktionsmischung 1,4 % | | |
| Topfzeit > 4 Stunden | | |
| PVK 30 | | |

| Stahlblechdaten nach 7 Tagen 25 °C | | nach 1 Std. 120 °C |
|---|---|---|
| Pendelhärte König [sek] Gemäß DIN 53 157 | 1. Tag 80<br>3. Tag 166<br>7. Tag 173 | 155 |
| Erichsentiefung [mm] Gemäß DIN 53 516<br>Glanz Gardner 20 °C<br>Glanz Gardner 60 °C<br>Glanz Gardner 85 °C | 0,9<br>75<br>90<br>96 | 6,4<br>69<br>89<br>91 |

| Beispiel 7: Selbstverlaufende Beschichtungsmasse | | |
|---|---|---|
| Epoxidharz: Zu der Mischung bestehend aus | | |
| 567 g | Diglycidether des Bisphenol A | 1.5 Mol |
| 525 g | Diglycidether des Bisphenol F | 1.5 Mol |
| 300 g | Tripropylenglykoldiacrylat | 1.0 Mol |
| 2 102 g | Schiefermehl DIN 70 | |
| 3 494 g | werden | |
| Aminhärter: | | |
| 170 g | IPDA 1 Mol | |
| 158 g | TMDA 1 Mol | |
| 70 g | Wasser | |
| 398 g | zugegeben. | |
| Wassergehalt Aminhärter 17,6 % | | |
| Wassergehalt Gesamtmischung 1,8 % | | |
| Harzanteil nach Aushärtung 45 % | | |
| Schiefermehlanteil nach Aushärtung 55 % | | |
| Topfzeit 4 bis 6 Stunden | | |

Beschichtungen im Bereich von 3 bis 20 mm Schichtdicke geben guten Verlauf mit rascher, blasenfreier Aushärtung innerhalb von 12 bis 16 Stunden.

| Beispiel 8: Reaktionsharzbeton | | |
|---|---|---|
| Epoxidharz: | | |
| 567 g | Diglycidether des Bisphenol A | 1.5 Mol |
| 525 g | Diglycidether des Bisphenol F | 1.5 Mol |
| 300 g | Tripropylenglykoldiacrylat | 1.0 Mol |
| 1 392 g | werden mit | |
| Aminhärter: | | |
| 170 g | IPDA 1 Mol | |
| 158 g | TMDA 1 Mol | |
| 111 g | Wasser | |
| 439 g | gemischt. Sodann werden 32 680 g Silbersand und 1 376 g Wasser unter Rührung zugegeben. | |
| Wassergehalt Aminhärter 25,3 % | | |
| Wassergehalt Gesamtmischung 4,1 % | | |
| Harzanteil nach Aushärtung 5,0 % | | |
| Silbersandanteil nach Aushärtung 95,0 % | | |

Nach 12 bis 16 Stunden entschalbare Formteile, nach 7 Tagen Aushärtung schlagfeste Fertigteilelemente.

**Ansprüche**

1. Zweikomponentensysteme auf Epoxidharzbasis und Diaminen mit 1 bis 20 Massenprozent Wasser als Härter und gegebenenfalls üblichen Zusatzstoffen,
dadurch gekennzeichnet,

8

daß sie einerseits aus (cyclo)aliphatischen, diprimären Diaminen von $C_2$ bis $C_{12}$ oder deren Mischungen in homogener Lösung mit 2 bis 40 Massenprozent Wasser und andererseits aus Polyglycidverbindungen von Bisphenolen, von aliphatischen Polyolen, von Polyetherpolyolen, oder von Dicarbonsäuren oder Mischungen dieser untereinander, jeweils jedoch in Paarung mit Polyacrylaten von Polyolen, oder Polyetherpolyolen bestehen.

2. Wäßrige Zweikomponentensysteme nach Anspruch 1,
dadurch gekennzeichnet,
daß die Härterkomponente aus einer Mischung aus Isophorondiamin und 2,2,4/2,4,4-Trimethylhexamethylendiamin besteht.

3. Verfahren zur Herstellung von wäßrigen Zweikomponentensystemen auf Epoxidharzbasis und Diaminen mit 1 bis 20 Massenprozent Wasser als Härter,
dadurch gekennzeichnet,
daß (cyclo)aliphatische, diprimäre Diamine von $C_2$ bis $C_{12}$ oder deren Mischungen in homogener Lösung mit 2 bis 40 Massenprozent Wasser mit Polyglycidverbindungen von Bisphenolen, von aliphatischen Polyolen, von Polyetherpolyolen, oder von Dicarbonsäuren oder Mischungen dieser untereinander, jeweils jedoch in Paarung mit Polyacrylaten von Polyolen, oder Polyetherpolyolen als Harzkomponente, sowie gegebenenfalls üblichen Zusatzstoffen bei Raumtemperatur in Abwesenheit von Katalysatoren vermischt werden.

4. Verfahren zur Herstellung von wäßrigen Zweikomponentensystemen nach Anspruch 3,
dadurch gekennzeichnet,
daß die Aminkomponente und Acrylatkomponente im Äquivalentverhältnis von 1 : 1 sowie Aminkomponente und Glycidkomponente im Äquivalentverhältnis von 1 : 1 zur Reaktion gebracht werden.

5. Verfahren zur Herstellung von wäßrigen Zweikomponentensystemen nach den Ansprüchen 3 und 4,
dadurch gekennzeichnet,
daß 4n + 4 Äquivalente Diamin, 2n Äquivalente Polyacrylate und 2n + 4 Äquivalente Polyglycide zur Abmischung und Reaktion eingesetzt werden, wobei n = 1 bis 6 bedeutet.

6. Verfahren zur Herstellung von wäßrigen Zweikomponentensystemen nach den Ansprüchen 3 bis 5,
dadurch gekennzeichnet,
daß als Polyacrylate Diacrylate oder Mischungen derselben mit 1 bis 20 Massenprozent Trimethylolpropantriacrylat eingesetzt werden.

7. Verfahren zur Herstellung von wäßrigen Zweikomponentensystemen nach Anspruch 6,
dadurch gekennzeichnet,
daß als Diacrylat Tripropylenglykoldiacrylat eingesetzt wird.

8. Verfahren zur Herstellung von wäßrigen Zweikomponentensystemen nach den Ansprüchen 3 bis 5,
dadurch gekennzeichnet,
daß als Polyglycide Diglycide von Bisphenolen oder Mischungen derselben mit 1 bis 20 Massenprozent Trimethylolpropantriglycid eingesetzt werden.

9. Verfahren zur Herstellung von wäßrigen Zweikomponentensystemen nach den Ansprüchen 3 bis 5,
dadurch gekennzeichnet,
daß Pigmente, Füllstoffe und/oder mineralische Baustoffe verwendet werden.

10. Verwendung der wäßrigen Zweikomponentensystemen gemäß Anspruch 1 zum Beschichten von organischen und anorganischen Materialien.

11. Verwendung der wäßrigen Zweikomponentensysteme gemäß Anspruch 10 zum Beschichten von Metallen, Kunststoffen oder mineralischen Oberflächen.

9